Europäisches Patentamt

European Patent Office

Office européen des brevets

(11) Publication number: **0 157 964**
**B1**

⑱

(12) EUROPEAN PATENT SPECIFICATION

(45) Date of publication of patent specification: **19.10.88**

(21) Application number: **84302139.5**

(22) Date of filing: **29.03.84**

(51) Int. Cl.⁴: **G 01 M 10/00,** G 09 B 23/12,
H 04 N 9/43, G 01 F 1/00

(54) **Apparatus for visually displaying fluid density in fluid flow model.**

(43) Date of publication of application:
**16.10.85 Bulletin 85/42**

(45) Publication of the grant of the patent:
**19.10.88 Bulletin 88/42**

(84) Designated Contracting States:
**DE FR GB NL**

(56) References cited:
**EP-A-0 044 730**
**EP-A-0 109 810**
**FR-A-2 116 551**
**FR-A-2 341 170**
**GB-A-2 134 348**

**MACHINE DESIGN, vol. 55, no. 14, June 1983,
page 30, Cleveland, Ohio, USA; "Buoyant
bubbles track complex air flows"
PATENTS ABSTRACTS OF JAPAN, vol. 7, no.
90, 14th April 1983, page 191P1235; & JP - A -
58 15160 (SUGAWARA KENK) 28-01-1983**

(73) Proprietor: **Nippon Furnace KOGYO KAISHA
LTD.**
**33-7, 5-chome, Shiba**
**Minato-ku Tokyo (JP)**

(72) Inventor: **Hasegawa, Toshiaki**
**12-13-407, 4-chome Honcho**
**Kawaguchi-shi Saitama-ken (JP)**
Inventor: **Watanabe, Moriyuki**
**2-15, Tsurukawa**
**Machida-shi Tokyo (JP)**
Inventor: **Hirose, Yasuo**
**801-88 Kanagaya Asahi-ku**
**Yokohama-shi Kanagawa-ken (JP)**

(74) Representative: **Jennings, Nigel Robin et al
KILBURN & STRODE 30 John Street
London WC1N 2DD (GB)**

EP 0 157 964 B1

Courier Press, Leamington Spa, England.

## Description

This invention relates to an apparatus for visualizing fluid density of a flow field in a fluid flow model.

For the determination of fluid density in a fluid flow model, there have been proposed a sampling method which has recourse to collection of samples from the fluid under test and an electric measuring method which involves using an electrolytic solution as one of the fluids constituting a flow field and measuring changes in the density of this solution in terms of changes in electroconductivity of the solution. These methods invariably require the density of fluid to be measured absolutely through the medium of a measuring instrument and do not amount to systems capable of relatively obtaining such quantitative information as pertains to density and mixture through visual observation of a flow field itself in a given cross section of a fluid flow. With these methods, therefore, it is not easy to study and comprehend density distribution and changes thereof, particularly the phenomenon of turbulent mixture, in the field flow. Moreover, since these methods of density measurement are invariably of contact type, necessitating installation of a sampling tube or a sensor within the flow field, they have a possibility of altering the flow of fluid from its actual state. As one system of visualization which permits overall observation of the trend of fluid flow in one entire region at a glance, the air bubble tracer method which uses air bubbles as the tracer has been in popular use since long ago. This method, however, is susceptible to heavy errors due to variations in specific gravity and cannot be utilized effectively for quantitative analysis of fluid flow.

## Summary of the invention

This invention has originated in a knowledge that when a liquid contains fine, homogeneous air bubbles densely therein, a beam of light projected through a flow of the liquid in a given cross section impinges upon the air bubbles falling in that cross section and undergoes irregular reflection and gives rise to irregularly reflected beams suitable for measurement and that the intensity of the irregularly reflected beams is thought to be proportionate to the number of affected air bubbles in a unit volume of the liquid, because the intensity of the irregularly reflected beams is directly proportional to the density of liquid, i.e., to the concentration of bubbles per unit volume. This invention therefore is aimed at providing an apparatus for visualizing the density of a liquid which forms a flow field in a liquid flow model.

To accomplish the object described above, this invention visualizes the density in a given liquid flow in a readily discernible state by the use of an apparatus composed of a visualizing device and a simulating color image system, which visualizing device comprises a model liquid tank, a compressed liquid source, a conduit inter-connecting said model liquid tank and said compressed liquid source, an orifice inserted in said conduit and having at least one small hole not more than 3 mm in diameter pierced therethrough such that local pressure drop of the compressed liquid during the passage thereof through said orifice may induce a phenomenon of deaeration resulting in release of a large volume of fine, uniform air bubbles into the flow of liquid and consequent production within said tank of a simulated field of flow by the portion of liquid flow containing said fine, uniform air bubbles, and a slit light source adapted to project a slit light upon said field of flow and to visualize said flow of liquid in a given cross section of said flow by virtue of the irregular reflection of said slit light by the air bubbles; and which simulating color image system comprises:

means causing a picture image imput formed of brightness signals to be converted to an RGB separator into color signals comprising an R-signal, a B-signal, and a G-signal of mutually substantially equal levels;

cutoff means in which a portion of at least one of the resulting three color signals is cut off to produce color signals of mutually different magnitudes; and

display means for reproducing on a color display a color image which is a composite of the color signals thus obtained.

The invention also comprises one or more further features, such as, liquid spurting inlet means for introducing into said tank the depressurized liquid containing said large volume of fine, uniform air bubbles, which further comprises nozzle means for introducing non-aerated liquid into said tank, in which said nozzle means surrounds said liquid spurting inlet means, and in which the intact signals are cut off at low cutoff points, in which the intact signals are cut off at high cutoff points, in which the intact signals are cut off at both low and high cutoff points, in which one of the cut off signals is amplified to a level above the other two, in which the reproduced image comprises a triangular-shaped area the legs of which constitute an ordinate and an abscissa and in which the color bands formed from the cut off color signals extend from the ordinate along the abscissa so that one color overlaps one other color and the third color overlaps the other two, in which the reproduced image comprises a triangular-shaped area the legs of which constitute an ordinate and an abscissa and in which the color band formed from the cut off color signals has a portion which is not overlapped by any other color band, in which adjacent blue and green bands overlap to form a narrow cream-colored band and the blue and red bands overlap to form a narrow purple-colored band, in which the reproduced image comprises a triangular-shaped area the legs of which constitute an ordinate and and abscissa and in which each color band formed from the cut off color signals has a portion which is not overlapped by any other color band, and in which said color simulating image system comprises a TV camera for photographing the aforementioned irregular reflection of light and feeding out a signal of brightness in accordance with brightness of the flow field, and RGB separating circuit for receiving the aforementioned signal of brightness and converting the aforementioned signal into an R signal, a G signal, and a B signal of mutually equal levels, cut off means for cuthing off at least one of the aforementioned RGB signals with a varying signal voltage level, and a color display unit for displaying relevant cutoff signals thereon and thereby representing density distribution of the aforementioned liquid in the aforementioned flow field in terms of variation in color brightness thereof, whereby the flow field of a liquid flow model reproduced by a liquid densely containing fine, homogeneous air bubbles is conveerted into an image of a given set of colors corresponding to varying intensity of irregular reflection of light.

Brief description of the drawings

Fig. 1 is a schematic diagram of a flow field visualizing device as one major component of an apparatus of this invention for visualizing a liquid in a liquid flow model;

Fig. 2 is a schematic diagram of a simulating color image device as another major component of the aforementioned apparatus;

Fig. 3 is a graph showing test results obtained on the relation between the orifice diameter and the proportions of air bubble diameters;

Fig. 4 is an explanatory diagram illustrating a visualized flow field;

Fig. 5 is a circuit diagram illustrating a typical embodiment of the simulating color circuit;

Fig. 6 is an explanatory diagram illustrating a color simulation;

Fig. 7 is a circuit diagram illustrating another typical embodiment of the simulating color circuit;

Fig. 8 is an explanatory diagram illustrating a color simulation;

Fig. 9 is a circuit diagram illustrating yet another typical embodiment of the simulating color circuit;

Fig. 10 is an explanatory diagram illustrating a color simulation; and

Fig. 11 is a circuit diagram illustrating an inverter circuit to be inserted in the simulating color circuit.

The water tank 1 in the present embodiment is formed of a material pervious to light such as, for example, acrylic resin or glass in the shape of a rectangular cylinder having a square cross section. It is provided in the top side with the water discharge outlet 6 and in the bottom side with the fluid inlet 7a. When the water tank 1 is intended as a water flow model, such as of a nozzle or burner, for example, it functions only as a vessel for the formation of a field of flow. When it is intended for visualizing the flow of a fluid within a furnace, the water tank 1 itself is utilized as part of the model. Thus, the shape of the water tank 1 is not limited to that which is illustrated in the diagram. The water tank 1 may be in the shape of a circular tube or an elbow pipe or in any other shape adapted to suit the purpose for which the water tank 1 is used. Further, the fluid spurting inlet 7 formed on the bottom side of the water tank 1 is generally fitted with a model for reproducing a field of flow desired to be observed, such as a nozzle model or burner model, for example. There are times when such a model is installed inside the water tank 1 as separated from the fluid spurting inlet 7a so that the flow emanating from the fluid spurting inlet 7a may be left unaffected. In the case of the present embodiment, a burner nozzle model 10 and a burner tile model 11 are installed.

For the purpose of studying the condition in which a fuel and air are mixed and measuring the proportions of the two fluids, a fluid incorporating air bubbles 4 (simulating a fuel) is spurted through the spurting inlet 7a of the burner nozzle model 10 and, at the same time, a fluid incorporating no air bubbles (simulating a secondary air) is spurted through an annular spurting inlet 7b at the periphery of the burner nozzle model 10, so that the two fluids thus spurted are allowed to mix with each other inside the burner tile model 11. Of course, there is no reason at all for limiting the number of fluid spurting inlets 7 and the positions thereof to those illustrated in the diagram. The water flow model may require installation of a plurality of burners in a furnace, for example, where the effect the positions of such burners have upon the distribution of heat is desired to the studied by utilizing the water flow model. It is also sometimes desirable to jet auxili

Description of the preferred embodiments

Now, the construction and operation of the present invention will be described in detail below with reference to typical embodiments illustrated in the accompanying drawings.

The apparatus of this invention for visualizing the density of liquid comprises a visualizing device A for reproducing a flow field with a liquid containing densely therein a large volume of fine, homogeneous air bubbles and a simulating color image system B for photographing the aforementioned flow field and reproducing the flow field in an image formed of colors differing with varying prescribed ranges of density.

The visualizing device A forms the subject matter of EP—A2—0109810 (which was published after the filing data of the present application) and will be described in more detail below. The simulating colour image system B is disclosed and claimed in British Patent Application Publication No. 2134348.

These two applications have inventors in common, are assigned to the same assignee, and the disclosures therein are incorporated herein by reference.

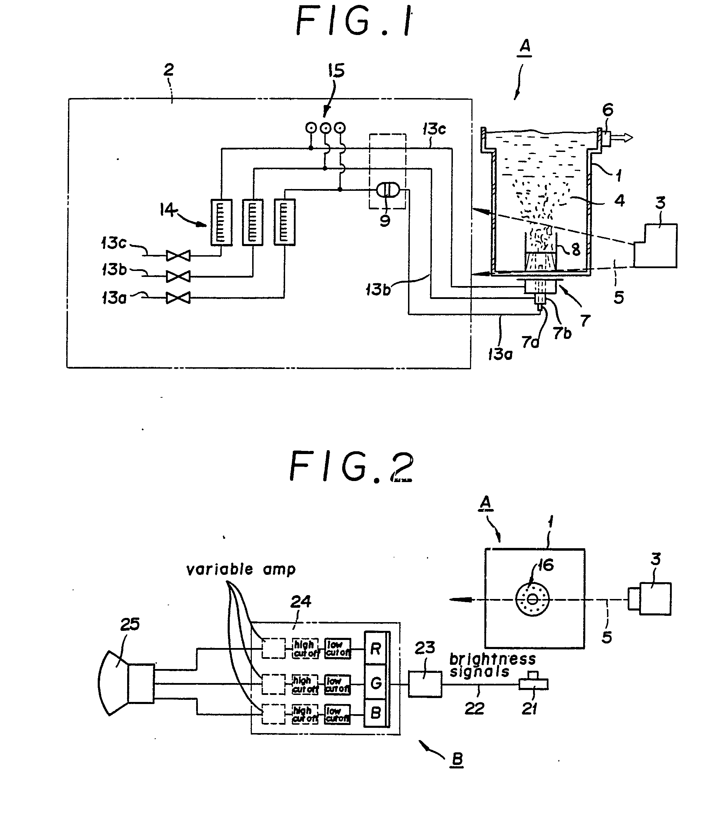

In Fig. 1, the apparatus for visualizing a liquid flow model in accordance with the principle of this invention is illustrated in a schematic diagram. The visualizing device is composed mainly of a model vessel or tank 1 for reproducing a flow field desired to be visualized, a supply unit 2 for supplying a fluid, e.g., water, containing air bubbles 4 to the model vessel 1 through the bottom, for example, of the model vessel, and a slit light source 3 for projecting a slit of light 5 into the flow field within the model vessel 1. In this visualizing device, the liquid which has flowed into the model vessel 1 through the bottom thereof reproduces a flow field inside the model vessel 1 and subsequently departs therefrom via a discharge outlet 6 in the upper part thereof and flows out through a drainage pipe, not shown. Since this effluent contains no extraneous matter except for air bubbles and these air bubbles are eventually dissolved into the liquid except for part thereof, the effluent may be discarded in its unaltered form. Optionally, it may be put to re-use without any treatment. The liquid may be introduced downwardly into the model vessel 1 through the upper part thereof and discharged through the bottom thereof.

In accordance with a preferred embodiment, the supply unit 2 which supplies water to the aforementioned model tank 1 comprises the compressed water source, which is not shown, connected through conduit or flow line 13a, orifice 9, and conduit 13a′ with a water spurting inlet 7a of the water tank 1. The phenomenon of deaeration resulting from a local pressure drop of the compressed water during the passage thereof through orifice 9, in part causes the air dissolved in the water being conveyed in a compressed state to emerge in the form of air bubbles 4 into the water. Thus, the water containing a large volume of air bubbles is supplied to model tank 1.

Supply unit 2 also supplies water which contains no air bubbles through flow line 13b to water spurting inlet 7b. Each of the flow lines 13 can have flow meters 14 therein as well as pressure gauges 15.

If desired, a transparent cylinder 8 simulating a burner tile can be disposed in tank 1 coaxial with the inflow of water thereinto. Auxiliary air from line 13c can be jetted into the water in tank 1 as a sheath around the water jetted thereinto through spurting inlets 7a and 7b.

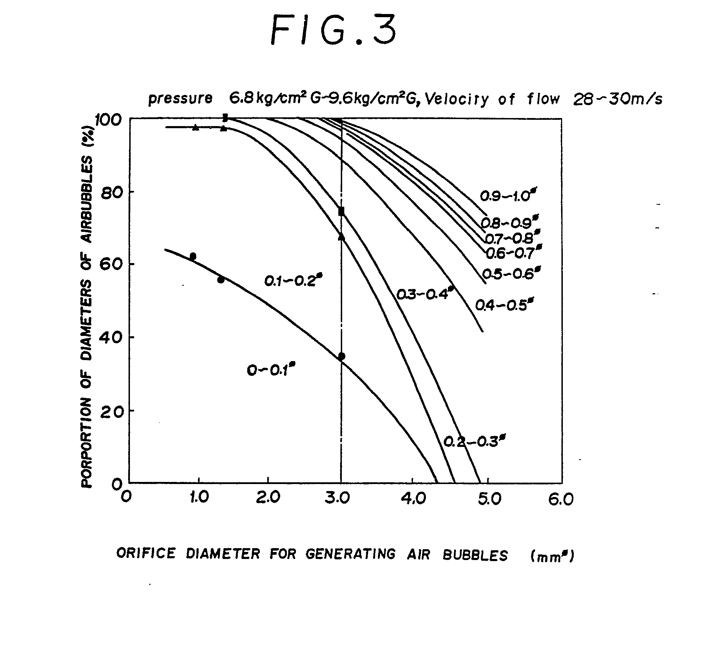

The orifice 9 comprises at least one small orifice or hole not more than 3 mm in diameter pierced therethrough. The diameter of the small hole in the orifice is closely related to the diameter and uniformity of the air bubbles 4 generated as described above. If the diameter of this hole exceeds 3 mm, the generated air bubbles 4 become so uniform as to render accurate measurement or quantitative measurement infeasable. Generally, when the air bubbles are used as a tracer, the diameter of the air bubbles optimal for the purpose of visualization is desired to fall in the range of 0.06 to 0.2 mm in due consideration of the possible error due to the poor ability of the air bubbles to follow the flow and the possible error due to the buoyancy of air bubbles. When the conditions necessary for preventing the dissolution of air bubbles 4 into the water from occurring too early is taken into account, the diameter is desired to fall in the neighborhood of 0.1 mm. According to the results of the experiment (Fig. 3) conducted by the inventors in search for the relation between the diameter of the orifice 9 and the proportions of particle diameters of the generated air bubbles 4, it is noted that when the orifice 9 has a diameter of 3 mm, air bubbles having diameters of not more than 0.2 mm, which are optimal for the visualization, account for about 70% of all the air bubbles generated and these air bubbles have an average diameter of 0.113 mm and enjoy generally fair uniformity and that, when the orifice 9 has a diameter of 4 mm, air bubbles having diameters of not more than 0.2 mm account for about 30% of all the air bubbles and suffer from poor uniformity. The results of the experiment indicate that the desirable diameter of the orifice is 1.5 mm or under and the most desirable diameter is between 0.8 mm and 0.5 mm. The reason for the lower limit 0.5 mm fixed for the diameter of the orifice 9, is that the orifice 9 having a smaller diameter may possibly be clogged with dirt from the fluid and prevented from stably generating air bubbles. Where a filter capable of completely removing dirt from the fluid is installed on the upstream side of the flow, the orifice may have a smaller diameter than than 0.5 mm. According to the results of Fig. 3, it is noted that when the diameter of the orifice is fixed at 0.8 mm and the pressure applied to the water at 9 kg/cm$^2$, the air bubbles 4 generated have diameters in the range of 0.0781 to 0.2106 mm. This diameter distribution has been confirmed by observation of an enlarged photograph through a microscope. In this case, the air bubbles have an average diameter of about 0.1 mm, which may be called the most desirable diameter for the purpose of visualization. A desired increase in the flow volume of air bubbles may be obtained by increasing the number of small holes pierced through the orifice 9. This addition to the number of small holes concurrently serves to ensure the constancy of the content of air bubbles in the flow.

The water tank 1 in the present embodiment is formed of a material pervious to light such as, for example, acrylic resin or glass in the shape of a rectangular cylinder having a square cross section. It is provided in the top side with the water discharge outlet 6 and in the bottom side with the fluid inlet 7a. When the water tank 1 is intended as a water flow model, such as of a nozzle or burner, for example, it functions only as a vessel for the formation of a field of flow. When it is intended for visualizing the flow of a fluid within a furnace, the water tank 1 itself is utilized as part of the model. Thus, the shape of the water tank 1 is not limited to that which is illustrated in the diagram. The water tank 1 may be in the shape of a circular tube or an elbow pipe or in any other shape adapted to suit the purpose for which the water tank 1 is used. Further, the fluid spurting inlet 7 formed on the bottom side of the water tank 1 is generally fitted with a model for reproducing a field of flow desired to be observed, such as a nozzle model or burner model, for example. There are times when such a model is installed inside the water tank 1 as separated from the fluid spurting inlet 7a so that the flow emanating from the fluid spurting inlet 7a may be left unaffected. In the case of the present embodiment, a burner nozzle model 10 and a burner tile model 11 are installed.

For the purpose of studying the condition in which a fuel and air are mixed and measuring the proportions of the two fluids, a fluid incorporating air bubbles 4 (simulating a fuel) is spurted through the spurting inlet 7a of the burner nozzle model 10 and, at the same time, a fluid incorporating no air bubbles (simulating a secondary air) is spurted through an annular spurting inlet 7b at the periphery of the burner nozzle model 10, so that the two fluids thus spurted are allowed to mix with each other inside the burner tile model 11. Of course, there is no reason at all for limiting the number of fluid spurting inlets 7 and the positions thereof to those illustrated in the diagram. The water flow model may require installation of a plurality of burners in a furnace, for example, where the effect the positions of such burners have upon the distribution of heat is desired to the studied by utilizing the water flow model. It is also sometimes desirable to jet auxiliary air into tank 1 through an annular ring of jet ports 16 connected with the air supply line 13c'.

Since the water tank 1 in the present embodiment has all the walls thereof made of a material pervious to light, the wall opposed to the human observer or the instrument for observation constitutes itself an inspection window and the side opposed to the slit light source 3 constitutes itself a window for the incident light. All the walls of the water tank 1 are not required to be made of material pervious to light. The water tank 1 fulfills its purpose amply so far as at least the sides serving as the inspection window and the window for the incident light are made of such a material. The inspection window and the window for the incident light permit occurrence of irregular reflection of light under the best condition when they are positioned so as to form angles in the range of 90 to 145° relative to the direction of the incidence of the slit light 5. Thus, these windows may be installed in such positions to fulfill their parts. When the water tank 1 is formed in the shape of a circular tube, the portion of the circular wall corresponding to 90 to 145° of the entire circumference of its cross section can be made of the material pervious to light, thus ensuring fulfillment of the function of the water tank 1. When the walls of the water tank 1 other than those serving as the inspection window and the window for the incident light are made of a material capable of absorbing light, the observation of air bubbles is facilitated because the air bubbles are enabled by the irregularly reflected beams of light to become amply conspicuous without requiring the illumination within the observation room to be decreased. The light absorbing material for this purpose may be a black coating applied to the inner sides of the aforementioned walls of the water tank 1. When the condition of the field of flow is to be observed in a plane perpendicular to the direction of flow, namely, in a cross section of the water tank 1, the range of 90 to 145° relative to the slit light 5 passing the field of flow transversely falls in the direction of the ceiling of the water tank 1. In this case, therefore, the human observer is required to look down into the water tank 1 from above the instrument for observation is required to be disposed above the water tank 1.

As the slit light source 3 for projecting the slit light 5 into the water tank 1, any of the known means available for this purpose may be adopted. For example, a plate containing a slit may be inserted into a slide projector to obtain a slit light. In this case, preparation of several plates containing a slit in a varied direction permits projection of a slit light 5 passing the flow in a desired cross section. When the slit light 5 impinges upon air bubbles 4, it is irregularly reflected. The irregularly reflected beams of light are of such nature that they will be best detected in the range of 90 to 145° relative to the direction of the incidence of the light. When the air bubbles 4 have diameters amply small and uniform, the intensity of the irregularly reflected beams of light is believed to be directly proportional to the number of air bubbles in a unit volume of flow, namely, the density of air bubbles. This means that the intensity of the irregularly reflected beams of light corresponds to the concentration.

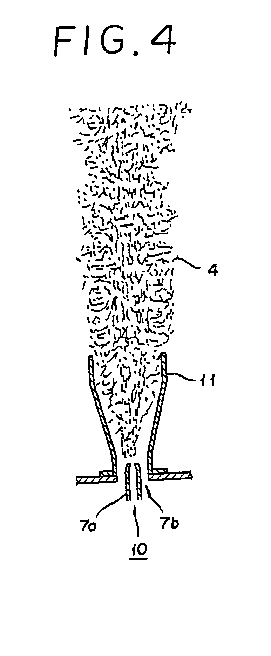

As the water from the compressed water source is transferred under pressure to the water tank 1, the water on passing the orifice 9 undergoes a phenomenon of deaeration in consequence of local pressure drop and the air dissolved in advance in the water is consequently educed densely in the water in the form of fine, uniform air bubbles, optical for visualization of the flow of water. The portion of the water densely containing these fine, uniform air bubbles reproduces a desired field of flow within the water tank 1. Then, as the slit light 5 is projected on the field of flow, it is irregularly reflected and scattered in all directions by the air bubbles 4. Consequently, the air bubbles 4 present in the flow of water are made to appear clearly like a shower of fire sparks, as illustrated in Fig. 4, visualizing the flow of water. In this case, the intensity of irregularly reflected beams of light is thought to be directly proportional to the number of air bubbles per unit volume, namely, the density of air bubbles. This means that the density of irregularly reflected beams of light is directly proportional to the concentration. Thus, the degree of density with which the air bubbles are contained in the flow of water or the concentration may be visually observed from the standpoint of the intensity of irregularly reflected beams of light.

Further, the flow of liquid inside the model tank 1 is displayed by the simulating color image system B illustrated in Fig. 2 in color of hue and brightness corresponding to the density.

The aforementioned simulating color image system B, one example of which is illustrated in a block diagram in Fig. 2, relies for its operation on the phenomenon of base band transfer using a coaxial cable 22 and comprises at least a TV camera 21 for photography, an amplifier circuit 23, if needed, for amplifying feeble image signal and brightness signal, a simulating color circuit 24 for converting brightness signal into color signal, and a color display unit 25. Of course, the system B may relay on the phenomenon of modulation transfer. In this case, the system naturally necessitates incorporation of an amplitude modification circuit and a demodulation circuit.

As the aforementioned TV camera 21, an industrial black-and-white TV camera is used, because the simulating color image system of this invention utilizes brightness signal. A colour TV camera may be used on condition that it will be operated to derive only brightness signal. Use of the color TV camera, however, is only expensive and is not practical.

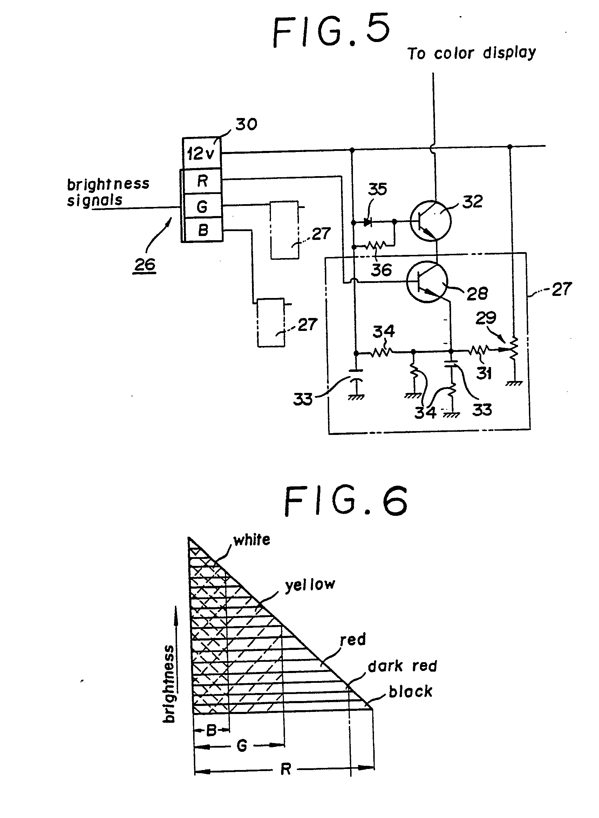

One embodiment of the simulating color circuit 24, as illustrated in Fig. 5, comprises an RGB separator circuit 26 for converting the brightness signal into an R color signal (herein referred to as R signal), a G color signal (herein referred to as G signal), and a B color signal (herein referred to as B signal) of mutually equal levels and a low cutoff circuit 27 for cutting off color signals below mutually different specific voltage levels in a color signal circuit intervening between the RGB separator circuit 26 and the color display device 25. The simulating color circuit 24 produces the color image in terms of brightness signal levels. The low cutoff circuit 27 comprises a variable resistor (potentiometer) 29 and a bypass or bias circuit both interposed between a transistor 28 serving to receive the color signal through the base thereof and an emitter of the transistor 28. The low cutoff circuit 27 is constructed so that the operating point or cut off point of the transistor 28 is set by the magnitude of the volume delivered to the emitter from the power source 30. Thus, transistor 28 is actuated only when the color signal fed in through the base has a voltage level exceeding prescribed limits, i.e., the voltage level to be determined based on the aforementioned operating or cut off point. To be specific, between the emitter of the transistor 28 and the ground, there exists a network comprised of a fixed resistor 31 and the potentiometer 29, which is interposed between a standard power source 30 and the ground, and a bias network comprised of fixed resistors 31 and 34 and condensers 33 interposed between the power source 30 and the ground. It is by the magnitude of resistance between the emitter and the ground, as determined by the setting of the potentiometer 29, in connection with the stated networks, that the emitter side voltage level of the transistor 28 is fixed. The low cutoff circuit 27, therefore, actuates the transistor 28 only when a voltage level set by the variable resistor (potentiometer) 29 is fed in through the base. When the magnitude of the bias voltage is properly adjusted, the low-level regions of the color signal corresponding to magnitudes of resistance, varied according to the setting of the potentiometer 29, are cut off and prevented from being fed out as output. The collector of the transistor 28 is directly connected to the emitter of a drive transistor 32 and adapted so as to amplify the color signal remaining after the aforementioned cutoff and the amplified color signal is then fed out to the color display unit 25. The base side of the drive transistor 32 is connected to the standard power source 30, in conjunction with the aforementioned bias network, through the medium of a series consisting of a diode 35 and a resistor 36 in parallel.

The aforementioned cutoff circuit 27 is formed in each of the color signal circuits laid between the RGB separator circuits 26 and the color display unit 25. They are given varying operating points (cutoff points or levels) by the operation of the variable resistors (potentiometer) 29. Since the color signals which have gone through the low cutoff circuits 27 possess varying cutoff regions when they are amplified and fed into the color display unit 25, they assume the state of all three, a combination of any two, or any one of the RGB signals, corresponding to the brightness level to give rise to a color picture. As the color display unit 25, a braun tube functions most advantageously from the practical point of view. Any of various types of braun tubes may be used. The braun tube of a color TV set may be used in its unaltered form, for example.

In the simulating color picture device constructed as described above, therefore, an object to be photographed is converted into an image input in the form of a brightness signal corresponding to the brightness of that object and the image input is than separated into RGB signals of mutually equal levels. By cutting off a given color signal with a desired level, a color signal is artifically produced and reproduced in the form of a color image on the color receiver tube 25. The brightness signal fed out of the TV camera 21 proportionately to the brightness of the object being photographed is first converted at the RGB separator circuit 26 into an R signal, a G signal, and a B signal of mutually equal levels. The resultant color signals are fed to the cutoff circuits 27 set at desired cutoff levels and incorporated in the respective color signal circuits, to cut off those regions or portions of color signals falling below the fixed cutoff levels. At least two of the signals must be cut off if it is desired to provide three signals of different magnitudes.

For the R signal, the cutoff value may be fixed at 0 so that this signal is wholly amplified and fed out to the image or display tube 25. For the G signal, the low cutoff level may be fixed at one-half the maximum value of the brightness level. And for the G signal, the low cutoff level may be set about four-fifths of the brightness level.

The portions of the color signals which exceed the respectively fixed low cutoff levels are allowed to be fed out as output. Since the signals initially have mutually equal levels, they will have different magnitudes according to the amounts cut off and will be reproduced as a triangular image having an ordinate and an abscissa. Since only the low portion, or portions, is cut off, the images will have the same bases which, as shown in Fig. 6, start at the ordinate and extend along the abscissa, according to their respective magnitudes. Thus, there will be overlapping of the three colors in the R region and of the green and red in the G region. Then, the image on the color receiver tube 25 will be a simulated color display of three colors, red, yellow, and white, corresponding to the brightness levels, as illustrated in Fig. 6. These colors have the degrees of brightness corresponding to the brightness levels. Take the color of red, for example. In the region of red, there exists bright red, dark red, and a red colour intermediate between bright and dark red. When the brightness level is extremely low, the red appears to be black. To the human eyes, therefore, the simulated color image appears in a total of five colors, i.e., black, dark red, red, yellow, and white. Even by setting the low cutoff level of the R signal below about one-fifth the maximum value of the brightness level for the purpose of permitting clear discrimination between the portion appearing in black and that appearing in dark red, there may be obtained desired repression of the color signal output within the low brightness region.

Here, the cutoff levels are set by suitably changing the magnitudes of resistance of the variable resistors (potentiometer) 29 in the respective cutoff circuits 27. In other words, the operating points (cutoff levels) of the transistors are changed by changing the magnitudes of resistance of the emitter sides of the transistors 8. Hence, by adjusting the variable resistors 29 in any or all of the three cutoff circuits 27, any desired relation between the three color signals can be obtained.

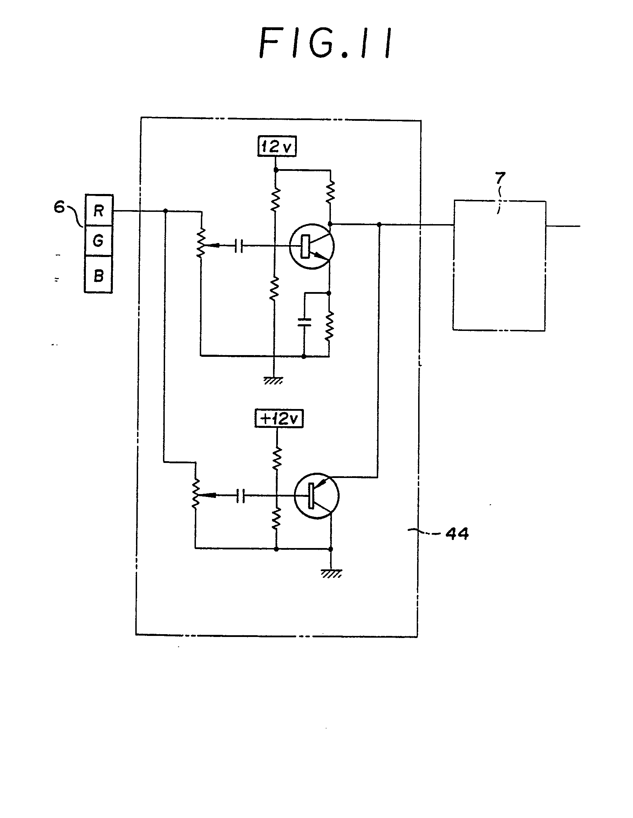

When an interesting aspect of the phenomenon under consideration produces a low brightness signal which, for example, is reproduced on the display unit as dark red, it is sometimes desirable to invert that signal by means of an inverter circuit, such as illustrated in Fig. 11 at 44.

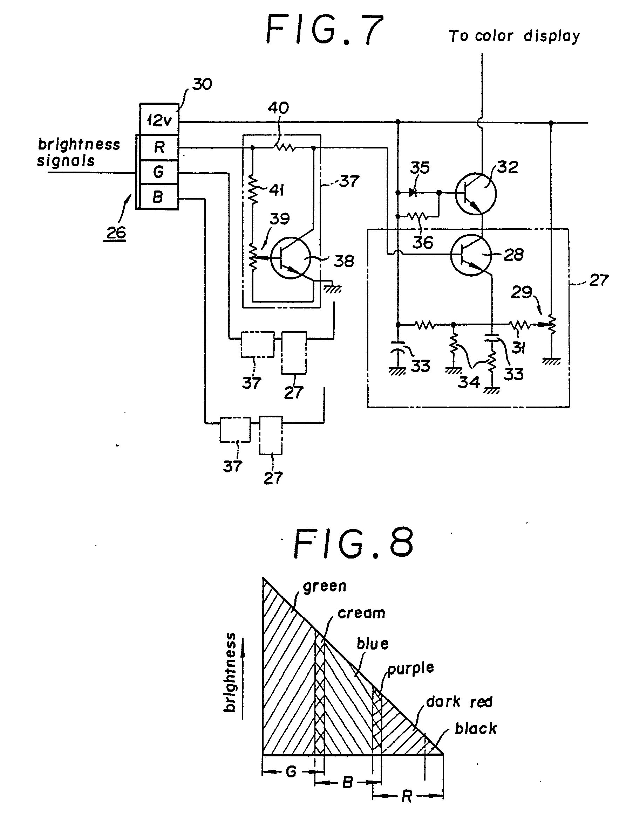

The simulating color circuit 24 may be provided with high cutoff circuits 37 in addition to the low cutoff circuits 27, as illustrated in Fig. 7, so that not only low brightness regions but also high brightness regions of the color signals will be cut off with mutually different levels and the R signal, the G signal, and the B signal will be distributed in mutually different brightness regions, as illustrated in Fig. 8.

Here, the high cutoff circuits 37 serve the purpose of cutting off the portions of the color signal above certain fixed voltage levels and passing only the portions of the color signals not reaching the cutoff levels. In one aspect, the high cutoff circuits 37 serve to inject color signals into the collectors of transistor 38 and the variable resistors 39, which are base biases of the transistors 38, and ground the portions of the color signals exceeding certain fixed levels through the emitter. These inputs are branched off the resistors 40 intervening between the RGB separator circuit 26 and the low cutoff circuits 27. To be specific, the RGB separator circuit 26 sides of the resistors 40 are grounded via the series of resistors 41 and the potentiometer 39, and the low cutoff circuit 27 sides thereof are grounded through the collectors and emitters of the transistors 38. Thus, the transistors 38 have their emitters grounded and their base sides connected to the potentiometer 39. When the magnitudes of the input voltage are changed and set at certain values by adjusting the potentiometer 39, the drive levels between the bases and the emitters are automatically fixed by these values. When the color signals assume voltage levels exceeding these drive levels, therefore, the transistors 38 are actuated to ground the color signals. As the result, the high levels of the color signals determined by these fixed values of the variable resistors 39 are cut off. These high cutoff circuits 37 are provided one each in the color signal circuits and have mutually different drive levels or high cutoff levels fixed therefor.

When the color signals which have gone through the aforementioned high cutoff circuits 37 and low cutoff circuits 27 are amplified and fed in the color image tube 25, therefore, they produce a color picture image on the tube because they have mutually different cutoff regions and are fed out with regions varying with brightness levels (inclusive of the case wherein such regions overlap in terminal portions). To be specific, the object to be photographed is reproduced in the form of a color picture image on the color image tube 25 with color image signals which are artificially produced by having the object fed in as a picture image in the form of brightness siganls corresponding to the brightness of the object, causing the brightness signals to be converted into RGB signals of mutually equal levels, and allowing the RGB signals cut off with mutually different high cutoff levels and low cutoff levels. As regards color designation, designation of the high brightness region with green color is effected by setting the high cutoff level at the maximum value of the brightness level and, at the same time, raising the low cutoff level to the high brightness side, designation of the medium brightness region with blue color is effected by setting the high cutoff level at about two-thirds the maximum value of brightness level and, at the same time, raising the low cutoff level to the medium brightness side, and designation of the low brightness region with red color is effected by setting the high cutoff level at about one-third the maximum value of brightness level and, at the same time, setting the low cutoff level at the minimum value of brightness level. Consequently, the picture image on the color image tube 25 is displayed in a simulated display with the three colors, red, blue, and green, in which the green extends from the low cutoff point to the ordinate, the blue from its low cutoff point to its high cutoff point, which laps the low cutoff point of the green, and the red, from its low cutoff point, if any, to its high cutoff point, which laps the low cutoff point of the blue. In this case, otherwise possible occurrence of a portion devoid of signal, namely, a black portion in the color boundaries is precluded and desired observation of changes in brightness is consequently facilitated by setting the low cutoff level slightly below the lower region of the high cutoff level. Thus, the picture image so displayed is simulated with the five colors, i.e., red, purple, blue, cream, and green, as shown in Fig. 8. All these colors have degrees of brightness corresponding to changes in the brightness level. In the case of red color, for example, there exists bright red, dark red, and a color intermediate therebetween. When the brightness level is extremely low, the red color appears in black. To the human eyes, therefore, the simulated color picture image appears in the six colors, black, dark red, purple, blue, cream and green. Desired repression of the color signal output in the low brightness region may be attained by setting the low cutoff level of the R signal slightly above the minimum value of brightness level, thereby ensuring clear distinction between the portions appearing in black and those appearing in dark red.

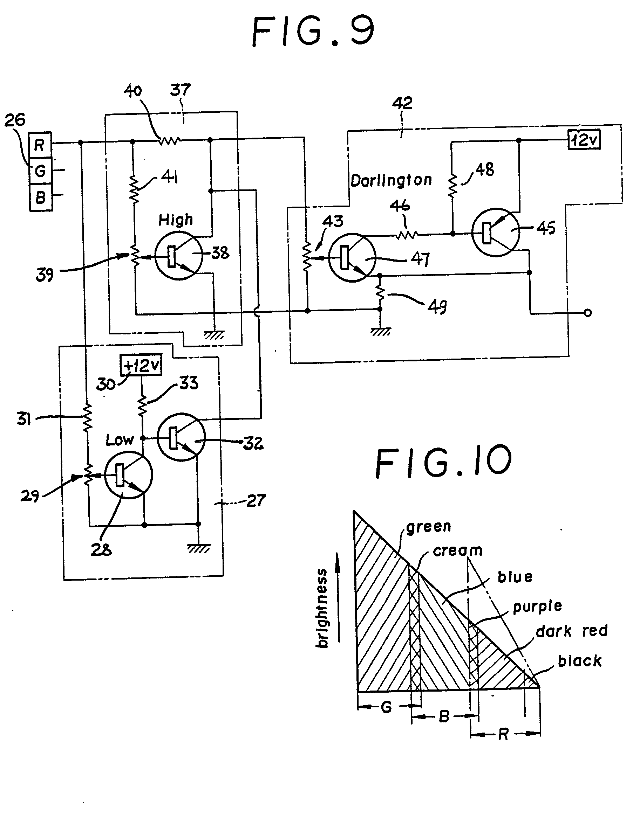

The simulating color circuit 24 may be provided with variable gain amplifying circuits 42 in addition to the low cutoff circuits 27 and the high cutoff circuits 37, as illustrated in Fig. 9, so that the R signal, the G signal, and the B signal will be distributed to mutually different brightness regions and, at the same time, desired portions of color signals will be amplified with a higher gain than the remaining portions thereof to enhance the brightness of a desired color. For example, the variable gain amplifying circuits 42 may be complementary Darlington circuits, which are formed by connecting the collector of NPN transistor 45 through the medium of bias resistor 46 to the base of PNP transistor 47 which, in turn, is connected to the power source through resistor 48, and connecting the emitter of the NPN transistor 45 to the collector of PNP transistor 47 and to the ground through resistor 49 and which incorporates a variable resistor (potentiometer) 43 on the input base side of NPN transistor 45. These circuits 42 are capable of varying magnitudes of resistance of the variable resistor 43 in the respective signal circuits, thereby varying the input signal voltage and consequently enabling a desired colour signal to be amplified with higher gain than the remaining color signals.

When the simulating color circuit 24 is constructed as described above, since the color signals which have gone through the aforementioned high cutoff circuits 37 and low cutoff circuits 27 are distributed to mutually different brightness levels and, at the same time, only desired color signals are fed out as amplified with higher gains than the remaining color signals, the picture image shown on the color image tube 25 represents the object in colors differing with changes in brightness levels of prescribed ranges, with stress on colors representing given brightness levels.

In the case of the color picture image which corresponds to brightness, when the high brightness region is designated with green color, the medium brightness region with blue color, and the low brightness region with red color respectively, so as to display the picture image in six colors, i.e., black, dark red, purple, blue, cream, and green, as illustrated in Fig. 10, there may ensue a possibility that the brightness in the low brightness level region will be decreased to a point where changes of brightness are observed with difficulty. This problem may be solved by lowering the magnitudes of resistance of the variable resistor 43 within the variable gain amplifying circuit 42 of the R signal circuit, thereby heightening the input signal voltage and amplifying the relevant color signal more than the other color signals and stressing the brightness of the color of the low brightness region. In a fuel flow model wherein the fuel is assumed to represent a liquid densely containing air bubbles, for example, the region in which the volume of air for aiding in combustion is fairly larger than that of fuel and the number of air bubbles per unit volume of the fuel is small, the image assumes low brigthness and, in its unaltered form, cannot be readily observed. If, in this case, the R signal is amplified to stress the brightness of the low brightness component, then the portion of this region will gain in prominence as though more clearly defining its boundary and become more readily observable.

The flame formed in a combustion burner is a manifestation of the incandescence which occurs when the fuel and the air for aiding in combustion of the fuel in a theoretical mixing ratio reach the maximum temperature. In the aforementioned liquid flow model, in which the liquid containing air bubbles is assumed to be the fuel, the relevant region has a small number of air bubbles and, as such, differs from the region of the maximum brightness level. Rather, the region of the highest brightness level or the region containing the largest possible number of air bubbles corresponds, in the actual burner flame, to the region in which air for aiding in combustion in the fuel is absent. Thus, the temperature of this region is low than that around the periphery of the flame and the color thereof approaches dark red. In the case of the simulating color circuit of Fig. 5, inverter circuits 44, such as are illustrated in Fig. 11, are interposed between the RGB separator circuits and the low cutoff circuits 27 so that the signals of brightness region (generally in low brightness region) corresponding to the theoretical mixing ratio will be converted into signals of the highest voltage levels and, in the meantime, the signal levels in the inherently high brightness region will be lowered to produce a color picture image in which the periphery of the flame assumes white.

As is evident from the foregoing description, the apparatus on this invention accomplishes visualization of the distribution of density of liquid in a liquid flow model by reproducing a flow field with a liquid density containing therein fine, homogeneous air bubbles, projecting the slit of light onto the flow field, thereby enabling the light to be irregularly reflected to visualize the liquid flow in a given cross section, photographing the irregular reflection of light with a TV camera, causing the brightness signal fed out of the TV camera to be converted to an RGB separator into an R signal, a G signal, and a B signal of mutually equal levels corresponding to the variation of brightness of the flow field, cutting off any one or two or all of the RGB signals at varying voltage level, and feeding the resultant RGB signals into a color display unit, thereby forming a color image thereon, whereby the distribution of density of fluid in the flow field will be displayed in terms of variations of color hue and brightness differing with varying prescribed ranges of brightness level, as based on the interrelation between the number of air bubbles in the unit volume of the liquid (the density of liquid) and the intensity of the irregular reflection of light.

It is to be understood that the invention is not to be limited to the exact details of construction, operation, or exact materials or embodiments shown and described, as various modifications and equivalents will be apparent to one skilled in the art, and the invention is therefore to be limited only by the full scope of the appended claims.

## Claims

1. An apparatus for visually displaying the density of a fluid in a fluid flow model, characterised by a visual display device $A$ and a colour image simulation system $B$, in which the visual display device $A$ comprises a model liquid tank (1), a source of pressurised liquid (2), a conduit (13a) interconnecting the tank (1) and the liquid source (2), an orifice (9) in the conduit having at least one hole not more than 3 mm in diameter extending therethrough such that the local pressure drop of the pressurised liquid during its passage through the orifice (9) incudes deaeration resulting in release of a large volume of fine, uniform air bubbles into the flow of liquid and the consequent production within the tank (1) of a simulated field of flow by the portion of the liqujid flow (4) containing the bubbles, and a slit light source (3) arranged to project a light slit (5) upon the field of flow (4) and to display visually the flow of liquid in a given cross section of the flow by virtue of the irregular reflection of the light slit (5) by the air bubbles, and in which the colour image simulation system $B$ comprises, means (21) for producing a picture image input composed of brightness signals, an RGB separator (24) arranged to convert the brightness signals into colour signals comprising an R-signal, a B-signal, and a G-signal of mutually substantially equal levels, cutoff means in which a portion of at least one of the resulting three colour signals is cut off at a level corresponding to a particular brightness level to produce colour signals representative of mutually different brightness ranges, and a display device (25) for reproducing a colour image which is a composite of the colour signals thus obtained.

2. Apparatus as claimed in Claim 1, characterised by a liquid spurting inlet (7a) for introducing the depressurised liquid containing the large volume of fine, uniform air bubbles into the tank (1).

3. Apparatus as claimed in Claim 2, characterised by a nozzle (7b) surrounding the liquid spurting inlet (7a) for introducing non-aerated liquid into the tank (1).

4. Apparatus as claimed in any preceding claim characterised in that the cutoff means are arranged to cut off the intact signals at low cutoff points.

5. Apparatus as claimed in any preceding claim characterised in that the cutoff means are arranged to cut off the intact signals at high cutoff points.

6. Apparatus as claimed in any preceding claim including an ampilfier arranged to amplify one of the cutoff signals to a level above the other two.

7. Apparatus as claimed in any preceding claim characterised in that the colour image simulation system comprises a TV camera for photographing the irregular reflection of light and feeding out a brightness signal representative of the brightness of the flow field, an RGB separating circuit for receiving and converting the brightness signal into an R signal, a G signal, and a B signal of mutually equal levels, cut off means for cutting off at least one of the RGB signals with a varying signal voltage level, and a colour display unit for displaying the cutoff signals thereby representing the density distribution of the liquid in the flow field in terms of variations in colour and in brightness, whereby the flow field of a liquid flow model represented as a liquid, densely containing fine, homogeneous air bubbles, is converted into an image of a given set of colours corresponding to the varying intensities of the irregular reflections of light.

## Patentansprüche

1. Apparat zur Anzeige der Flüssigkeitsdichte in einem Flüssigkeitsflußmodell, gekennzeichnet durch eine Sichtanzeigeeinrichtung $A$ und ein Farbbildsimulationssystem $B$, wobei die Sichtanzeigeeinrichtung $A$ einen Modellflüssigkeitstank (1) aufweist, eine Quelle von Druckflüssigkeit (2), eine Leitung (13a) zur Verbindung des Tanks (1) mit der Flüssigkeitsquelle (2), eine Düse (9) in der Leitung mit wenigstens einem Loch eines Durchmessers von weniger als 3 mm darin, derart, daß der Lokale Druckabfall der Druckflüssigkeit bei Durchgang durch die Düse (9) Entgasung verursacht, so daß eine große Menge kleiner gleichförmiger Luftblasen in dem Flüssigkeitsstrom erzeugt wird lund daher in dem Tank (1) durch den blasenenthaltenden Teil des Flüssigkeitsflusses (4) ein simuliertes Flußfeid, und ein Schlitzlichtquelle (3), ausgebildet zur Projektions eines Lichtschlitzes (5) auf das Flußfeld (4) und zur Sichtanzeige des Flüssigkeitsflusses in einem bestimmten Querschnitt des Flusses aufgrund der unregelmäßigen Reflexion des Lichtschlitzes (5) durch die Luftblasen, und wobei das Farbbildsimulationssystem *B* eine Einrichtung (21) zur Erzeugung eines Bildeingangsignales, bestehend aus Helligkeitssignalen, aufweist sowie einen RGB-Separator (24), zur Umwandlung der Helligkeitssignale in Farbsignale, enthaltend ein R-Signal, ein B-Signal und ein G-Signal von untereinander im wesentlichen gleichem Pegel, Abschneideeinrichtungen, in denen ein Teil wenigstens eines der drei resultierenden Farbsignale bei einem Pegel abgeschnitten wird, der einem bestimmten Helligkeitspegel entspricht, zur Erzeugung von Farbsignalen, die voneinander unterschiedliche Helligkeitsbereiche darstellen, und eine Anzeigeeinrichtung (25) zur Wiedergabe eines Farbbildes, das aus den so gewonnenen Farbsignalen zusammengesetzt ist.

2. Apparat nach Anspruch 1, gekennzeichnet durch einen Flüssigkeitsausstoßeinlaß (7a) zur Einleitung der entspannten, eine große Menge kleiner gleichmäßiger Luftblasen enthaltenden Flüssigkeit in den Tank (1).

3. Apparat nach Anspruch 2, gekennzeichnet durch eine den Flüssigkeitsausstoßeinlaß (7a) umgebende Düse (7b) zur Einleitung nicht mit Luft versetzter Flüssigkeit in den Tank (1).

4. Apparat nach einem der vorhergehenden Ansprüche, dadurch gekennzeichnet, daß die Abschneideeinrichtungen die vollständigen Signale an unteren Abschneidepunkten abschneiden.

5. Apparat nach einem der vorhergehenden Ansprüche, dadurch gekennzeichnet, daß die Abschneideeinrichtungen die vollständigen Signale an oberen Abschneidepunkten abschneiden.

6. Apparat nach einem der vorhergehenden Ansprüche, dadurch gekennzeichnet, daß ein Verstärker vorgesehen ist zur Verstärkung eines der abgeschnittenen Signale auf einen Pegel oberhalb der beiden anderen.

7. Apparat nach einem der vorhergehenden Ansprüche, dadurch gekennzeichnet, daß das Farbbildsimulationssystem eine Fernsehkamera aufweist zur Aufnahme der unregelmäßigen Lichtreflexion sowie zur Ausgabe eines Helligkeitssignales, das die Helligkeit des Flußfeldes wiedergibt, und eine RGB-Separatorschaltung für den Empfang und die Umsetzung des Helligkeitssignales in ein R-Signal, ein G-Signal und ein B-Signal von untereinander gleichen Pegeln, Abschneideeinrichtungen zum Abschneiden wenigstens eines der RGB-Signale mit variablem Signalspannungspegel, und eine Farbanzeigeeinrichtung zur Anzeige der abgeschnittenen Signale unter Darstellung der Dichteverteilung der Flüssigkeit in dem Flußfeld in Form von Farb- und Helligkeitsunterschieden, wodurch das Flußfeld eines Flüssigkeitsfluß modelles, dargestellt als Flüssigkeit mit dieht verteilten kleinen homogenen Luftblasen, umgewandelt wird in ein Bild mit einer bestimmten Zahl von Farben, die zu den unterschiedlichen Intensitäten der ungleich mäßigen Lichtreflexion korrespondieren.

**Revendications**

1. Appareil d'affichage de la densité d'un fluide dans un modêle d'écoulement de fluids, caractérisé par un dispositif d'affichage à et un système de simulation d'image couleur B, dans lequel le dispositif d'affichage à comprend une cuve de liquide modêle (1), une source de liquide sous pression (2), une conduite (13a) reliant la cuve (1) et la source de liquide (2), un orifice (9) dans la conduite comprenant au moins un trou de pas plus de 3 mm de diamêtre s'étendant au travers de sorte que la chute de pression locale du liquide sous pression pendant son passage par l'orifice (9) induit une désaération d'où il résulte la libération d'un grand volume de bulles d'air fines et uniformes dans l'écoulement de liquide et la production subséquent dans la cuve (1) d'un champ simulé d'écoulement par la partie de l'écoulement de liquide (4) contenant les bulles, et une source lumineuse en forme de fente (3) disposée pour processer une fente de lumière (5) sur le champ d'écoulement (4) et pour afficher l'écoulement du liquide dans une section donnée de l'écoulement en raison de la réflexion irrégulière de la fente de lumière (5) par les bulles d'air et dans lequel le système de simulation d'image couleur B comprend des moyens (21) pour produire une entrée d'image constituée de signaux de luminance, en séparateur RVB (24) disposé pour convertir les signaux de luminence en signaux couleur comprenant un signal R, un signal B et un signal V de niveau sensiblement égaux les une aux autres, un moyen de coupure dans lequel une partie d'au moins l'un des trois signaux couleur résultants est coupé à un niveau correspondant à un niveau de luminance particulier pour produire des signaux couleur représentatifs de gammas de luminance mutuellement différences, et un dispositif d'affichage (25) pour reproduire une image couleur qui est un composite des signaux couleur ainsi obtenus.

2. Appareil selon la revendication 1, caractérisé par une entrée de giclage de liquide (7a) pour introduire le liquide dépressurisé contenant le grand volume de bulles d'air fines et uniformes dans la cuve (1).

3. Appareil selon la revendication 2, caractérisé par une buse (76) entourant l'entrée de giclage de liquide (74) pour introduire le liquide non-aéré dans la cuve (1).

4. Appareil selon l'une quelconque des revendications précédentes, caractérisé en ce que les moyens de coupure sont disposés pour couper les signaux intacts à des points de coupure bas.

5. Appareil selon l'une quelconque des revendications précédentes, caractérisé en ce que les moyens de coupure sont disposés pour couper des signaux intacts à des points de coupure hauts.

6. Appareil selon l'une quelconque des revendications précédentes, comprenant un amplificateur disposé pour amplifier l'un des signaux de coupure à un niveau supérieur aux deux autres.

7. Appareil selon l'une quelconque des revendications précédentes, caractérisé en ce que le système de simulation d'image couleur comprend une caméra de télévision pour photographier la réflexion irrégulière de lamière et fournir un signal de luminance représentatif de la luminance du champ d'écoulement, un circuit de séparation RVB pour recevoir et couvertir le signal de luminance en un signal R, un signal V et un signal B de niveaux mutuellement égaux, des moyens de coupure pour couper au moins l'un des signaux RVB par un niveau de tension variable, et un module d'affichage couleur pour afficher les signaux de coupure représentant ainsi la distribution de densité de liquide dans le champ d'écoulement en termes de variations de couleur et de luminosité, d'où il résulte que le champ d'écoulement d'un modèle d'écoulement de liquide représenté comme un liquide contenant de façon dense des bulles d'air homogènes et fines est converti en une image d'un ensemble donné de couleurs correspondant aux intersités variables des réflexions de lumière irrégulières.

# FIG.1

# FIG.2

variable amp

brightness
signals

# FIG.3

pressure 6.8 kg/cm² G~9.6kg/cm²G, Velocity of flow 28~30m/s

ORIFICE DIAMETER FOR GENERATING AIR BUBBLES (mm⁰)

# FIG. 4

# FIG.5

To color display

30

12v

brightness
signals

R

G

B

26

35

32

36

28

27

27

34

29

33

31

34

33

# FIG.6

white

yellow

red

dark red

black

brightness

B

G

R

4

# FIG.7

To color display

brightness signals

# FIG.8

green
cream
blue
purple
dark red
black

brightness

G
B
R

0 157 964

FIG.9

FIG.10

6

# FIG.11